(19) **Europäisches Patentamt**

**European Patent Office**

**Office européen des brevets**

(11) Veröffentlichungsnummer : **0 451 474 B1**

(12) # EUROPÄISCHE PATENTSCHRIFT

(45) Veröffentlichungstag der Patentschrift :
**27.07.94 Patentblatt 94/30**

(51) Int. Cl.$^5$ : **G01B 11/24**

(21) Anmeldenummer : **91102737.3**

(22) Anmeldetag : **25.02.91**

(54) Verfahren und Vorrichtung zur berührungslosen Vermessung von Objektoberflächen.

(30) Priorität : **09.03.90 DE 4007502**

(43) Veröffentlichungstag der Anmeldung :
**16.10.91 Patentblatt 91/42**

(45) Bekanntmachung des Hinweises auf die
Patenterteilung :
**27.07.94 Patentblatt 94/30**

(84) Benannte Vertragsstaaten :
**CH DE FR GB IT LI**

(56) Entgegenhaltungen :
**GB-A- 2 125 648**
**GB-A- 2 204 397**
**US-A- 3 894 802**
**US-A- 4 316 670**

(73) Patentinhaber : **Firma Carl Zeiss**
**D-73446 Oberkochen (DE)**
㊻ **CH DE FR IT LI**
Patentinhaber : **CARL ZEISS-STIFTUNG**
**HANDELND ALS CARL ZEISS**
**D-89518 Heidenheim (Brenz) (DE)**
㊻ **GB**

(72) Erfinder : **Küchel, Michael, Dr.**
**Keplerstrasse 3**
**W-7082 Oberkochen (DE)**

## Beschreibung

Die Erfindung betrifft ein Verfahren und eine Vorrichtung zur berührungslosen Vermessung von Objektoberflächen mit Hilfe von auf die Objektoberfläche projizierten Streifenmustern, die von einer Kamera detektiert und ausgewertet werden.

Es gibt bereits eine ganze Reihe verschiedener Verfahren, mit denen relativ große Bereiche einer Objektoberfläche bezüglich ihrer x-, y- und z-Koordinaten auf einmal vermessen werden, indem durch Projektion oder Schattenwurf eine regelmäßige, meist gitterförmige Struktur auf das Objekt aufbelichtet wird. Hierzu gehören die verschiedenen Varianten des unter dem Namen "Moiré-Topographie" bekannten Verfahrens, bei dem der infolge zweimaligen Lichtdurchganges durch ein Gitter gleicher Periode auftretende sogenannte Moiré-Effekt für die Gewinnung von Höheninformation der interessierenden Objektoberfläche ausgenutzt wird.

So wird beispielsweise in dem von Takasaki in Applied Optics 6 (1970), auf Seite 1467 beschriebenen "Schattenwurf"-Moiré-Verfahren die zu untersuchende Objektoberfläche durch ein davor gestelltes Amplitudengitter von einer möglichst punktförmigen Lichtquelle beleuchtet. Die derart struktiert beleuchtete Oberfläche wird dann von einem Objektiv und zwar nochmals durch das gleiche Gitter hindurch, auf einen Schirm abgebildet, wobei die Beleuchtungsstrahlen und die Abbildungsstrahlen einen Winkel ($\alpha$) einschließen. Da das auf die Objektoberfläche aufbelichtete Gitter entsprechend der Oberflächenform deformiert wird, entstehen aufgrund des Moiré-Effekts Konturlinien, die Information über die Tiefenausdehnung der Objektpunkte geben. Diese Konturlinien sind auch dann noch sichtbar, wenn die Grundfrequenz des zur Beleuchtung verwendeten Gitters selbst bei der Abbildung nicht mehr aufgelöst wird oder sogar gezielt "weggemittelt" wird, indem es während einer Aufnahme um eine oder mehrere volle Gitterperioden verschoben wird.

Eine weitere Variante der Moiré-Topographie-Verfahren ist das sogenannte Projektions-Moiré-Verfahren. Bei diesem Verfahren wird ein Gitter im Beleuchtungsstrahlengang eines Projektivs auf die Objektoberfläche abgebildet und die Objektoberfläche durch ein Objektiv auf ein zweites Gitter vor der verwendeten Aufnahmekamera abgebildet. Ein derartiges Verfahren ist z.B. in der EP-B1-0 121 353 beschrieben. Auch in dieser Verfahrensvariante ist es wieder möglich, die beiden Gitter, das Projektionsgitter und das zur Abbildung verwendete Gitter, synchron während einer Aufnahme zu verschieben, um Gitterunregelmäßigkeiten auszumitteln, ohne daß sich dabei die aufgrund des Moiré-Effektes entstehenden Konturlinien bzw. deren Lage im Raum ändert. Hierbei ist vorausgesetzt, daß die Gitter die gleiche Gitterkonstante besitzen und die Brennweiten von Projektiv und Objektiv gleich sind. Aus der genannten Patentschrift ist es außerdem bekannt, symmetrisch zum Meßstrahlengang zwei Projektoren beidseitig unter gleichem Abstand und gleichem Projektionswinkel anzuordnen, um durch die beidseitige Projektion überlappende und aneinander anschließende Gittermuster zu erzeugen und damit das Problem von Abschattungen bei der Vermessung von stark gekrümmten Objektoberflächen auszuschalten.

In der dritten bekannten Variante von Moiré-Topographie-Verfahren wird auf ein zweites Gitter vor der Aufnahmekamera verzichtet. Stattdessen übernimmt hier das Raster der Zeilen der Aufnahmekamera oder die Pixelperiode einer CCD-Kamera die Funktion des Decodierungsgitters. Dieses sogenannte "Scanning"-Moiré-Verfahren ist beispielsweise in Applied Optics, Vol. 16, Nr. 8 (1977) auf Seite 2152 beschrieben.

Neben den beschriebenen Verfahren der Moiré-Topographie ist es auch bekannt, das Objekt zu vermessen, indem direkt, die Höheninformation aus der Verformung des Streifenmusters auf der Objektoberfläche berechnet wird, ohne ein zweites Gitter vor der Kamera zu verwenden. Solche sogenannten "Streifenprojektionsverfahren" sind beispielsweise in der US-PS 4 641 972, der US-PS 4 488 172 und der US-PS 4 499 492 beschrieben.

Sowohl bei den Moiré-Topographie-Verfahren als auch der Streifenprojektionsmethode ist es erforderlich, für die quantitative Auswertung der Streifenmuster bzw. Konturlinien zu Koordinatenmeßwerten die zyklische Helligkeitsvariation der Streifensysteme auf der Objektoberfläche zu messen. Dies wird im allgemeinen als Phasenmessung bezeichnet. Üblicherweise geht man hierbei so vor, daß die Lage des Projektionsgitters während einer Messung in mehreren Schritten um feste Beträge verschoben wird, die einer Phasenänderung von beispielsweise 90° oder 120° entsprechen.

Mit den bekannten Verfahren ist es jedoch nicht ohne weiteres möglich, größere Objekte aus dem Bereich der industriellen Fertigung ausreichend genau zu vermessen, insbesondere wenn diese Objekte Unstetigkeiten wie Kanten und Stufen aufweisen, oder wenn es sich um bewegte Objekte handelt. Hierfür ist folgender Umstand verantwortlich:

Wegen der zentralperspektivischen Anordnung von Projektion und Beobachtung ist der Abstand aufeinanderfolgender Konturlinien nicht konstant sondern nimmt mit wachsender Tiefe des Objekts zu. Deshalb ist es ohne die Kenntnis des **absoluten** Abstandes der Objektoberfläche an mindestens einem Punkt auch nicht möglich, Aussagen über den Verlauf eines Profils einer stetigen Oberfläche zu gewinnen. Die gängigen Phasenmeßmethoden berechnen den Objektabstand jedoch nur Modulo $2\pi$, d.h. sie liefern nur Relativwerte innerhalb einer Streifenordnungszahl. Mit diesen Phasenmeßmethoden ist es deshalb auch nicht möglich, die infolge von Kanten und Stufen auftretenden Sprungstellen der auszuwertenden, zyklischen Funktion zu beseitigen.

Ein weiteres Problem besteht darin, daß bei den genannten Phasenmeßmethoden die auf die Oberfläche des zu vermessenden Objekts projizierten Streifen bewegt werden. Dadurch geht der Bezug der Streifen bzw. Konturlinien zum gerätefesten Koordinatensystem verloren. Der Anschluß der Meßwerte in den verschiedenen Stellungen des Gitters ist mit der geforderten hohen Genauigkeit jedoch nur dann möglich, wenn auch die Lage der Gitter in den Stellungen bis auf Bruchteile einer Gitterperiode absolut bekannt ist. Das bedeutet aber, daß die Verschiebung des Gitters entweder hochgenau gemessen werden muß, was nur mit relativ großem Aufwand möglich ist, oder die Positionen, zwischen denen verschoben wird, möglichst genau eingehalten werden. Auch das ist aber nicht einfach zu bewerkstelligen, da kleine Erschütterungen der zu vermessenden Oberfläche oder der Meßeinrichtung bzw. deren Relativlage zueinander bereits unkontrollierte Phasenänderungen zur Folge haben, die das Meßergebnis verfälschen.

Sollen Objekte mit großer Tiefenausdehnung fein aufgelöst werden, dann ist es erforderlich, auf verschiedene Tiefenbereiche nachzufokussieren. Mit den bekannten Verfahren ist das jedoch nicht ohne weiteres möglich, da im Zuge der Fokussierbewegung auch unvermeidbare kleine laterale Verschiebungen des Bildes des zu vermessenden Objektes gegenüber dem Abtastgitter bzw. der Kamera auftreten, die die gemessene Phasenlage der Streifen- bzw. Konturlinien verändern. Die bei verschiedenen Fokussierungen gemessenen Objektpartien lassen sich dann nicht mehr fehlerfrei aneinander anschließen.

Außerdem arbeiten die bekannten Verfahren relativ langsam, da für die Phasenmessung jeweils mehrere, mindestens drei aufeinanderfolgende Bilder aufgenommen werden müssen.

Es ist die Aufgabe der vorliegenden Erfindung, ein Verfahren und eine Vorrichtung der eingangs genannten Art zu schaffen, das sich durch eine hohe Meßgenauigkeit und eine möglichst geringe Empfindlichkeit der Messung gegenüber störenden Umwelteinflüssen auszeichnet.

Diese Aufgabe wird durch des im Anspruch 1 angegebene Verfahren und durch die im Anspruch 8 angegebene Vorrichtung gelöst.

Durch die getrennte Aufnahme zweier geneigt projizierter Streifenmuster mit gleicher Periode entsteht erst im Rechner eine Schwebungsfrequenz, die zur Gewinnung von Höheninformationen der Prüflingsoberfläche ausgewertet wird. Diese Schwebungsfrequenz ist unabhängig von der Relativlage zwischen den Gittern und der Kamera, da die Orte konstanter Differenz zwischen den Phasen der projizierten Streifensysteme fest im Raum liegende Konturflächen beschreiben, so lange jedenfalls die gegenseitige Phasenlage der beiden Projektionsgitter zueinander einmal fest eingestellt ist. Es ist daher möglich, die Gitter gemeinsam, beispielsweise zum Zwecke der Phasenmessung oder zur Eliminierung von Restfehlern, um beliebige Beträge relativ zur Kamera zu verschieben, ohne daß sich die auszuwertenden Konturflächen der Schwebungsfrequenz hierbei mitverschieben, d.h. die Phasenmeßtechnik und die Lage der Konturflächen sind voneinander entkoppelt. Entsprechend wirken sich störende Umwelteinflüsse, durch die die Lage der Kamera relativ zu den Gittern verändert wird, wie z.B. Erschütterungen der Meßvorrichtung, nicht auf die Phasenmessung aus. Man kann deshalb die Kamera auch auf unterschiedliche Objektbereiche durchfokussieren (Erhöhung der Tiefenauflösung), ohne daß hierdurch die Phasenmessung und dementsprechend die daraus abgeleitete Höheninformation über das zu vermessende Objekt verfälscht wird. Weiterhin ist es möglich zwischen der Aufnahme mehrerer Bilder die Gitter gemeinsam zu verschieben und unterschiedliche Partien des Objekts optimal zu beleuchten. Hierdurch wird die Dynamik der Lichtmessung erhöht.

Die gegenseitige Lage der beiden Projektionsgitter, die allein das z-Koordinatensystem bei diesem Verfahren festlegt, läßt sich hingegen mit einfachen Mitteln konstant halten, indem beide Gitter einfach auf den gleichen Träger aufgebracht werden.

Da die auszuwertenden Phasendifferenzen wie beschrieben selbst bei gemeinsamer Bewegung der Projektionsgitter raumfest bleiben, können die Phasendifferenzen auch während einer Gitterbewegung für jeden Punkt über mehrere Videobilder aufakkumuliert werden. Zu dieser Form der Mittelung trägt jedes Videobild bei. Das Auswerteverfahren ist deshalb sehr schnell und genau verglichen mit den eingangs beschriebenen bekannten Verfahren.

Die beiden Streifenmuster können entweder zeitlich nacheinander projiziert und im Zeitmultiplexbetrieb ausgewertet werden, es ist aber auch möglich, die Streifenmuster mit unterschiedlicher Farbe zu projizieren und sie dann gleichzeitig über Farbteiler getrennt von mehreren Kameras aufzunehmen und auszuwerten.

Besonders zweckmäßig ist es, wenn nicht nur zwei, sondern drei oder mehr Projektoren vorgesehen sind, wobei der Winkel zwischen zwei der Projektoren klein gegen den Winkel zwischen zwei anderen Projektoren ist. Auf diese Weise lassen sich zwei Schwebungsfrequenzen mit sehr unterschiedlicher Periode aus den jeweiligen Phasendifferenzen je zweier projizierter Muster bilden. Hierdurch wird der Eindeutigkeitsbereich der Messung erweitert, ohne daß dazu Gitter mit unterschiedlicher Gitterkonstante benötigt werden.

EP 0 451 474 B1

Es ist zweckmäßig, die Streifensysteme telezentrisch zu projizieren, da dann der Abstand der Konturebenen gleicher Phasendifferenz konstant bleibt. Entsprechendes gilt für den Beobachtungsstrahlengang der Kamera: bei bildseitig telezentrischem Strahlengang ändert sich die Bildgröße während des Fokussierens auf unterschiedliche Objektpartien nicht.

Die in der Vorrichtung verwendeten Musterträger sind vorteilhaft Gitter mit sinus- bzw. kosinusförmiger Transmissionscharakteristik. Dann entstehen auf der Objektoberfläche Streifen mit sinusförmiger Intensität, deren Phasenlage sich gut und genau auswerten läßt.

Eine annähernd kosinusförmige Intensitätsverteilung auf der Objektoberfläche läßt sich jedoch auch mit Hilfe von Rechteckgittern erzeugen, beispielsweise indem das Gitter defokussiert projiziert wird oder in der Fourierebene des Projektionsobjektivs, beispielsweise in der Pupille, eine Schlitzblende angeordnet ist.

Die Musterträger (Gitter) sind zweckmäßig auf einem gemeinsamen Träger mit kleinem Temperaturausdehnungskoeffizienten aufgebracht und beispielsweise über eine Federwippe in der Gitterebene gegenüber der Kamera bewegbar aufgehängt. Hierdurch ergibt sich ein gegen Umwelteinflüsse besonders unempfindlicher Aufbau.

Nachfolgend werden vorteilhafte Ausführungsformen der Erfindung anhand der Figuren 1 - 5 näher erläutert.

Fig. 1 ist eine Prinzipskizze, die den optischgeometrischen Aufbau eines ersten Ausführungsbeispiels der Erfindung zeigt:

Fig. 2 ist ein vereinfachtes Blockschaltbild des zur Signalauswertung des Ausführungsbeispiels nach Fig. 1 verwendeten Auswerterechners;

Fig. 3 ist eine Prinzipskizze eines zweiten, gegenüber Fig. 1 um einen weiteren Projektor erweiterten Ausführungsbeispiels;

Fig. 4 ist eine perspektivische Darstellung der wesentlichen Bauteile der in Fig. 3 vereinfacht skizzierten Vorrichtung;

Fig. 5a-b sind Teilschaltbilder des zur Signalauswertung der Vorrichtung nach Fig. 3 und 4 benutzten Auswerterechners.

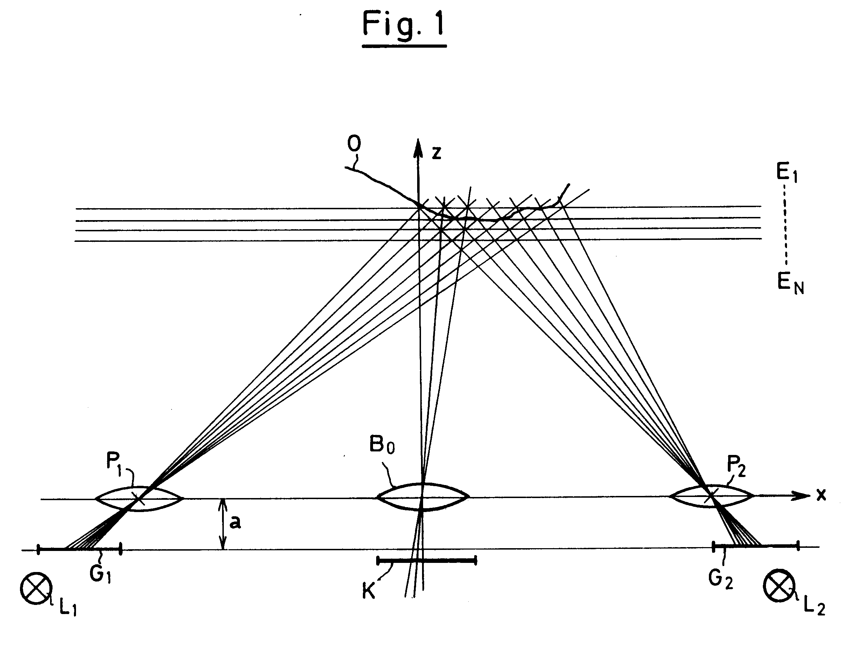

Im Ausführungsbeispiel nach Fig. 1 sind mit $(P_1)$ und $(P_2)$ die Optiken zweier Projektoren bezeichnet, mit denen die von zwei Lichtquellen $(L_1)$ bzw. $(L_2)$ beleuchteten, in den Projektoren angeordneten Gitter $(G_1)$ und $(G_2)$ auf das zu vermessende Objekt (O) projiziert werden. Die Gitter $(G_1)$ und $(G_2)$ besitzen die gleiche Gitterkonstante und liegen in einer Ebene in einem Abstand (a) hinter den Projektionszentren der Optiken $(P_1)$ und $(P_2)$. Auf die Gitter ist ein Streifenmuster mit sinusförmigem Intensitätsverlauf aufgebracht.

Im eigentlichen Meßvolumen, d.h. dort wo sich die Projektionsstrahlen schneiden und auch das zu vermessende Objekt (O) angeordnet ist, lassen sich nun Flächen konstanter Phasendifferenz zwischen den dorthin projizierten Streifenmustern der beiden Projektoren $(P_1)$ und $(P_2)$ definieren. Diese Flächen sind in der gezeigten Anordnung Ebenen und mit $(E_1)$ bis $(E_N)$ bezeichnet. Diese Flächen sind jedoch nicht sichtbar, da die Streifenmuster der beiden Gitter $(G_1)$ und $(G_2)$ von den Projektoren abwechselnd, d.h. zeitlich nacheinander projiziert werden.

Zwischen den beiden Projektoren $(P_1)$ und $(P_2)$ ist eine Videokamera bestehend aus der Kameraoptik (Bo) und dem mit (K) bezeichneten Kamerasensor angeordnet. Diese Kamera nimmt die nacheinander projizierten, durch die unregelmäßige Objektoberfläche (O) deformierten Streifenmuster der beiden Projektoren $(P_1)$ und $(P_2)$ auf.

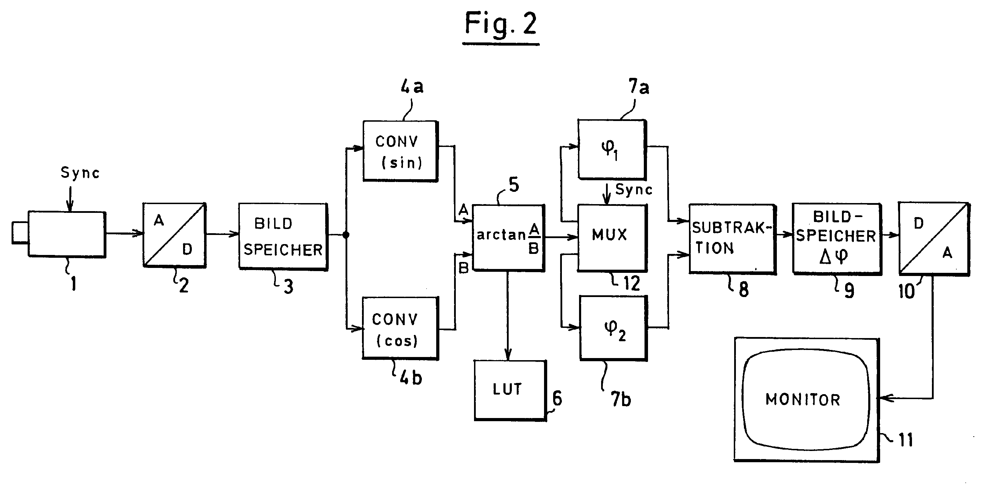

Die Auswertung der Kamerasignale läßt sich am besten anhand des vereinfachten Blockschaltbilds in Fig. 2 beschreiben. Dort ist der Ausgang der CCD-Kamera (1) über einen Analog/Digitalwandler (2) einem Bildspeicher (3) zugeführt, der die Bilder der nacheinander projizierten Streifenmuster zwischenspeichert. Dieser Bildspeicher dient lediglich als Pufferspeicher und ist dann, wenn die nachfolgende Elektronik schnell genug arbeitet, entbehrlich.

Das digitale Videosignal wird dann parallel zwei Konvolutionsbausteinen (4a) und (4b) zugeführt, die jeweils aus der näheren Umgebung einzelner Bildpunkte den Sinus (4a) und den Kosinus (4b) der Streifenphase an diesen Bildpunkten berechnen. Entsprechende Algorithmen sind beispielsweise in Optical Engineering, Vol. 23, No. 4 (Juli/August 1984) Seite 391 - 395 beschrieben.

Die dem Kosinus und dem Sinus der Streifenphase entsprechenden Signale werden dann den Eingängen (A) und (B) eines Bausteines (5) zugeführt, der über den Arcustangens A/B die Streifenphase $(\varphi)$ mit Hilfe eines Bausteines (6) berechnet, in dem die Phasenwerte $(\varphi)$ in einem look-up-table als Funktion des Arcustangens abgelegt sind.

Der Ausgang des Bausteines (5) ist über einen mit der Kamera (1) synchronisierten Multiplexer (12) alternierend an zwei parallel geschaltete Bildspeicher (7a) und (7b) gelegt. In diese Bildspeicher werden separat die Phasenwerte $(\varphi_1)$ für alle Bildpunkte des über den Projektor $(P_1)$ projizierten Streifenmusters (7a) und die Phasenwerte $(\varphi_2)$ des über den Projektor $(P_2)$ projizierten Streifenmusters (7b) getrennt eingelesen und zwischengespeichert. Beide Bildspeicher (7a) und (7b) sind außerdem mit einer Subtraktionsstufe (8) verbunden. Dort wird in einem nächsten Schritt die Differenz ($\Delta\varphi$) der Phasen ($\varphi_1$)und ($\varphi_2$) der beiden Streifenmuster für die einzelnen Bildpunkte gebildet und einem weiteren Bildspeicher (9) zugegeführt. In diesem Bildspeicher (9) sind somit die ortsfesten Phasendifferenzen ($\Delta\varphi$) abgelegt, die ein direktes Maß für die Objektentfernung z sind. Der Pufferspeicher (9) ist über einen Digital/Analogwandler (10) mit dem Eingang eines Monitors (11) verbunden, auf dem das Ergebnis dargestellt wird. Die Punkte gleicher Phasendifferenz ergeben Höhenschichtlinien, deren Form die Objektoberfläche beschreibt.

Da die im Rechner selbst gebildeten Phasendifferenzen ($\Delta\varphi$) ortsfest sind und die z-Information deshalb nicht mehr von der Kameralage bzw. der Lage der Kamera (K) zu den Projektoren ($P_1$) und ($P_2$) abhängt, können nun im Bildspeicher (9) die Phasendifferenzen ($\Delta\varphi$) aus sehr vielen nacheinander aufgenommenen Kamerabildern aufgenommen und zur Verbesserung des Signal/Rauschverhältnisses aufgemittelt werden. Während der Aufnahme der Streifenbilder kann die Kamera durchfokussiert werden, um nach und nach das ganze Objekt scharf zu stellen, ohne daß hierdurch die Information über die Objektentfernung verfälscht wird. Ebenso können die beiden Gitter gemeinsam während des Meßvorganges verschoben werden, um damit das Objekt optimal zu beleuchten oder auf der Gitterverschiebung basierende, zusätzliche, genauere Phasenmeßmethoden auf die Auswertung anzuwenden.

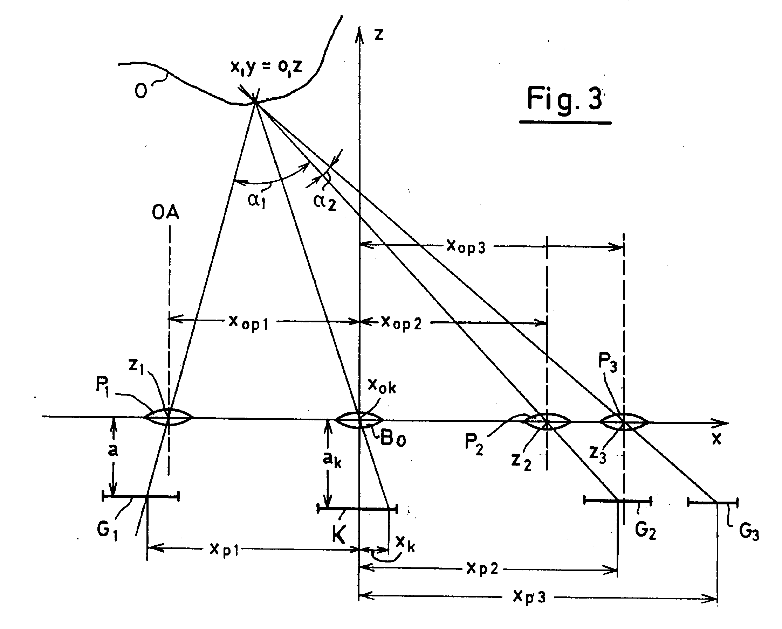

Im Ausführungsbeispiel nach Fig. 1 bzw. Fig. 2 sind noch keine Maßnahmen vorgesehen, um die Vieldeutigkeit der Streifenphase, die dort Modulo $2\pi$ berechnet wird, zu beseitigen. Dies wird wie nachstehend beschrieben im Ausführungsbeispiel nach Fig. 3 bis 5 unter Verwendung eines zusätzlichen Projektors gelöst.

In der schematischen Darstellung nach Fig. 3 ist ein Aufbau dargestellt, der im wesentlichen aus drei Projektoren mit den Projektionsoptiken ($P_1$), ($P_2$) und ($P_3$) und drei Gittern ($G_1$), ($G_2$) und ($G_3$) mit jeweils gleicher Gitterperiode besteht. Der Kamerasensor ist wieder mit (K) bezeichnet und befindet sich mit dem vorgesetzten Beobachtungsobjektiv (Bo) wie in dem bereits in Fig. 1 skizzierten Fall zwischen den Projektoren ($P_1$) und ($P_2$). Während die Projektoren ($P_1$) und ($P_2$) nun unter einem relativ großen Winkel ($\alpha_1$) von ca. 30° zueinander geneigt sind, schließen die beiden nebeneinander angeordneten Projektoren ($P_2$) und ($P_3$) einen relativ kleinen Winkel ($\alpha_2$) von beispielsweise 0,5° ein. Dieser kleine, in der Zeichenebene wirksame Winkel ($\alpha_2$) kann dadurch realisiert sein, daß der Projektor ($P_2$) mit dem Gitter ($G_2$) oberhalb der Zeichenebene und der Projektor ($P_3$) mit dem Gitter ($G_3$) unterhalb der Zeichenebene angeordnet ist. Da eine Verschiebung der Projektoren und der Gitter parallel zu den Teilungen der Gitter keinen Einfluß auf die Auswertung der von der Kamera (K) aufgenommenen Bilder hat, ist in dem Ausführungsbeispiel nach Fig. 3 die Anordnung der Projektionszentren ($Z_1$), ($Z_2$) und ($Z_3$) zur Vereinfachung auf einer Geraden vorgesehen.

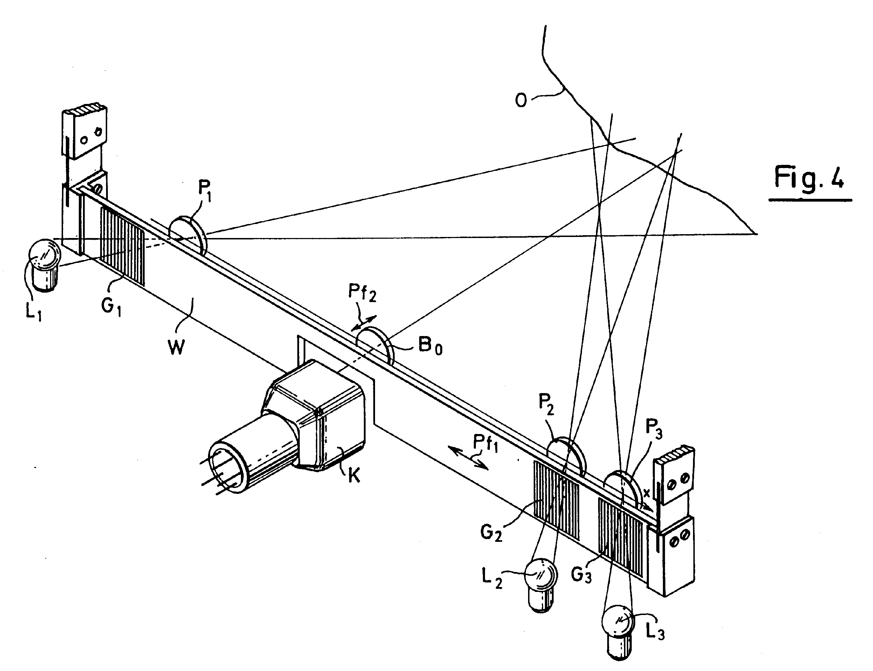

Durch diese Anordnung lassen sich zwei Sätze von Ebenen konstanter Phasendifferenz definieren, nämlich die Phasendifferenzen der Streifenmuster der beiden Projektoren ($P_1$) und ($P_2$) sowie die Phasendifferenzen der beiden Streifenmuster der Projektoren ($P_2$) und ($P_3$), wobei den aufeinanderfolgenden Flächen gleicher Phasendifferenz unterschiedliche effektive Wellenlängen ($\lambda_{eff}$) in z-Richtung zugeordnet werden kann. Die effektive Wellenlänge ($\lambda_{eff}$) wird durch die Gitterkonstante der Gitter ($G_1$), ($G_2$) und ($G_3$) und den Winkel ($\alpha_1$) bzw. ($\alpha_2$) zwischen den Projektionsachsen der jeweiligen Projektoren bestimmt und hängt, da die Gitterkonstanten der Gitter ($G_1$) bis ($G_3$) gleich sind, deshalb nur von den Winkeln ($\alpha_1$) und ($\alpha_2$) ab. Nachfolgend werden Formeln abgeleitet, aus denen sich die Objektkoordinaten (x), (y) und (z) aus den von den drei Projektoren ($P_1$), ($P_2$) und ($P_3$) projizierten Streifenmustern für die einzelnen Punkte der Objektoberfläche berechnen lassen. Hierfür ist vorausgesetzt, daß sich die Projektionszentren ($Z_1$), ($Z_2$) und ($Z_3$) der Projektionsobjektive auf eine sich in x-Richtung erstreckenden Geraden liegen und die drei Gitter ($G_1$) bis ($G_3$) in einem gleichen Abstand (a) hinter dieser Geraden angeordnet sind. Die Gitter sind beispielsweise wie in Fig. 4 skizziert auf einem gemeinsamen Träger (W) aus Glas oder einem Material mit niedrigen thermischen Ausdehnungskoeffizienten wie z.B. Zerodur angeordnet und können gemeinsam relativ zur CCD-Kamera (K) in Richtung der Geraden (x) mit Hilfe einer Federwippe spielfrei bewegt werden. Auch die Projektoren ($P_1$), ($P_2$) und ($P_3$) sind auf einem gemeinsamen in Fig. 4 nicht dargestellten Träger angeordnet, der aus dem gleichen Material besteht, wie der Träger (W) der Gitter. Eine hinreichende Wärmeleitung zwischen beiden Trägern gewährleistet, daß der Temperaturunterschied zwischen ihnen gering ist. Der Einfluß der Umgebungstemperatur auf die Meßgenauigkeit ist dadurch reduziert. Die photoempfindliche Fläche der Kamera, d.h. der CCD-Sensor ist im Abstand ($a_K$) hinter dem Beobachtungsobjektiv (Bo) angeordnet.

Durch den beschriebenen Aufbau ist die Geometrie des Meßgeräts im wesentlichen bestimmt. Die z.B. an einem exemplarischen Punkt (x, y = 0,z) projizierten Gitterorte ($x_{p1}$, $x_{p2}$, $x_{p3}$) werden mit der Videokamera, z.B. einer CCD-Kamera, beobachtet. Das Zentrum ($x_{0k}$) des Beobachtungsobjektivs (Bo) der Kamera legt den Ursprung des von den Projektoren ($P_1$) bis ($P_3$) vorbestimmten Koordinatensystems fest.

Durch Betrachten ähnlicher Dreiecke erhält man für die Projektoren

$$\frac{x_{p1} - x_{op1}}{a} = \frac{x - x_{op1}}{z} \quad (1)$$

$$\frac{x_{p2} - x_{op2}}{a} = \frac{x - x_{op2}}{z} \quad (2)$$

$$\frac{x_{p3} - x_{op3}}{a} = \frac{x - x_{op3}}{z} \quad (3)$$

und für die Kamera

$$\frac{x_k}{a_k} = \frac{x}{z} \quad (4)$$

Die Kombination der Kameragleichung (4) mit den Projektionsgleichungen (1) - (3) liefert

$$z = \frac{x_{op1} \cdot a}{(n_1 + \delta_1)\, P + x_k \frac{a}{a_k}} \quad (5)$$

$$z = \frac{x_{op2} \cdot a}{(n_2 + \delta_2)\, P + x_k \frac{a}{a_k}} \quad (6)$$

$$z = \frac{x_{op3} \cdot a}{(n_3 + \delta_3)\, P + x_k \frac{a}{a_k}} \quad (7)$$

wobei die Differenzen $(x_{opi}-x_{pi}, i=1..3)$ als das $(n_i + \delta_i)$-fache der Streifenperiode (P) mit $(n_i)$ als einem Element der natürlichen Zahlen und $(\delta_i < 1)$ ausgedrückt sind.

Betrachtet man den Zusammenhang zwischen den Beobachtungen der Streifenmuster zweier Projektoren und bildet Differenzen, so erhält man aus (5), (6) und (7)

$$z = \frac{(x_{op1} - x_{op2}) \cdot a}{(n_1 - n_2 + \delta_1 - \delta_2)\, P} \quad (8)$$

$$z = \frac{(x_{op1} - x_{op3}) \cdot a}{(n_1 - n_3 + \delta_1 - \delta_3)\, P} \quad (9)$$

$$z = \frac{(x_{op2} - x_{op3}) \cdot a}{(n_2 - n_3 + \delta_2 - \delta_3)\, P} \quad (10)$$

oder

$$z = \frac{K_1}{N_1 - \Delta_1} \quad (11)$$

$$z = \frac{K_2}{N_2 - \Delta_2} \quad (12)$$

$$z = \frac{K_3}{N_3 - \Delta_3} \quad (13)$$

wobei $K_1$, $K_2$, $K_3$ Gerätekonstanten sind, $N_1 = n_1 - n_2$, $N_2 = n_1 - n_3$, $N_3 = n_2 - n_3$ und $\Delta_1 = \delta_1 - \delta_2$, $\Delta_2 = \delta_1 - \delta_3$, $\Delta_3 = \delta_2 - \delta_3$ ist.

Die Formeln (11), (12) und (13) beschreiben Ebenen konstanter Phasendifferenz ($N_i$ - $\Delta_i$) zwischen je zwei Projektionen, die parallel zur x/y-Ebene liegen. Sie hängen nicht vom Beobachtungsort ($x_k$, $y_k$) auf der Kamera ab. Zur Messung müssen die ganzen Zahlen ($N_1$, $N_2$, $N_3$) und die Bruchteile ($\Delta_1$, $\Delta_2$, $\Delta_3$) bestimmt werden.

Den Flächen gleicher Phasendifferenz, die durch die Gleichungen (11), (12) und (13) beschrieben sind, lassen sich unterschiedliche effektive Wellenlängen ($\lambda_{eff}$) der Phasendifferenzen zuordnen. Für die aus einer Kombination der Projektoren ($P_1$) und ($P_2$) gewonnene Gleichung (11) und die aus einer Kombination der Projektoren ($P_1$) und ($P_3$) gewonnene Gleichung (12) liegen relativ kurze effektive Wellenlängen vor, während in dem durch Gleichung (13) beschriebenen Fall der Kombination der beiden Projektoren ($P_2$) und ($P_3$) eine vergleichsweise große Wellenlänge ($\lambda_{eff}$) zugeordnet werden kann. Wesentlich ist, daß die verschiedenen effektiven Wellenlängen über die Winkel ($\alpha_1$), ($\alpha_2$) zwischen den Projektoren hochstabil eingestellt werden können.

Für die Auswertung der Messungen in einem Rechner bietet es sich an, die Formeln (11), (12) und (13) noch einmal umzuformulieren:

$$z = \frac{K_1}{\mathrm{int}\left(\dfrac{K_1}{K_3}N_3 + \dfrac{K_1}{K_3}\Delta_3 - \Delta_1\right) + \Delta_1} \qquad (14)$$

$$z = \frac{K_2}{\mathrm{int}\left(\dfrac{K_2}{K_3}N_3 + \dfrac{K_2}{K_3}\Delta_3 - \Delta_2\right) + \Delta_2} \qquad (15)$$

Zur vollständigen Bestimmung der Koordinaten (x), (y) und (z) eines Bildpunktes werden die Lateralkoordinaten (x) und (y) über das Abbildungsgesetz mit

$$x = \frac{x_k}{a_k} \cdot z \quad (16)$$

$$y = \frac{y_k}{a_k} \cdot z \quad (17)$$

berechnet.

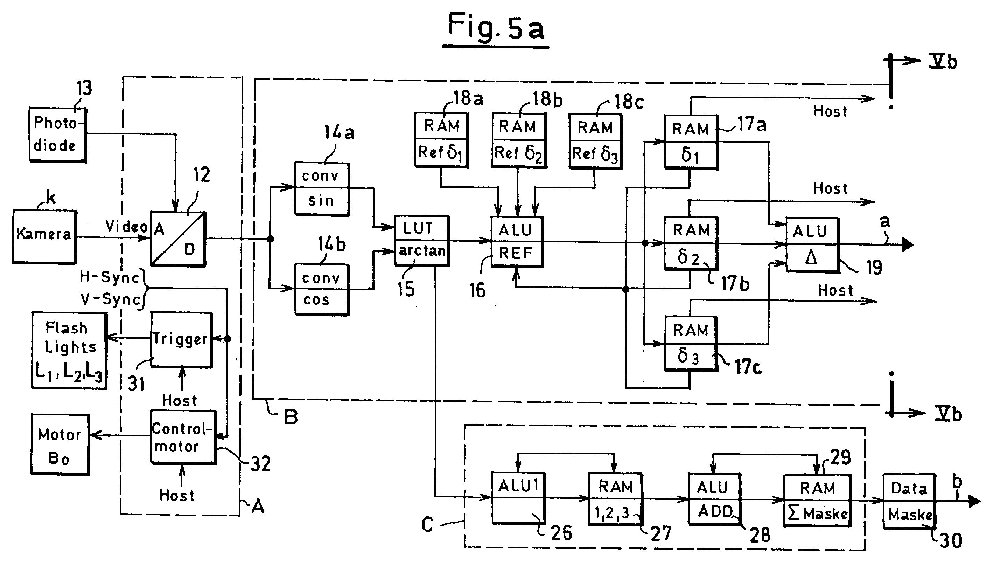

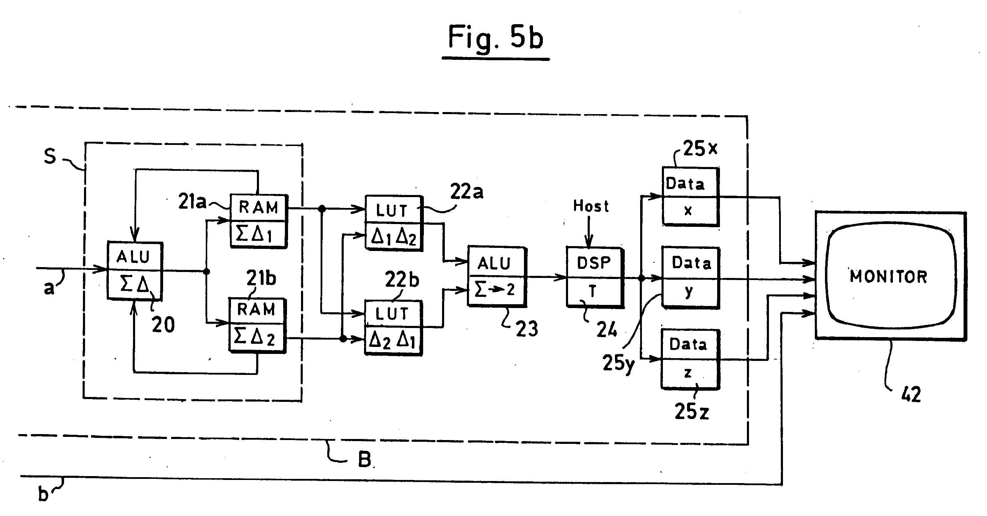

Zur Auswertung werden die projizierten Streifenmuster der drei Projektoren ($P_1$) bis ($P_3$) in Zeitmultiplexbetrieb durch das Objektiv (Bo) von der Kamera (K) aufgenommen und getrennt in verschiedene Bildspeicher eingelesen. Die Berechnung der Objektkoordinaten (x), (y) und (z) nach den angegebenen Formeln geschieht dann wie nachstehend anhand von Fig. 5a und 5b beschrieben in einem hardwaremäßig aufgebauten Bildverarbeitungsrechner. Dieser Rechner verarbeitet die Bilddaten in Videoechtzeit. Er ist hierzu in Form einer Pipelinestruktur auch mit teilweise parallelen Datenpfaden aufgebaut und wird von einem Host-Rechner mit bekannter von Neumann-Struktur, d.h. beispielsweise einem kommerziell erhältlichen Prozeßrechner gesteuert. Für die weitere Beschreibung des Auswerterechners wird auf die Figuren 5a und 5b Bezug genommen, in denen dieser im Blockschaltbild dargestellt ist.

Dort sind die drei unterschiedlichen Funktionsbaugruppen mit (A), (B) und (C) bezeichnet. Die Funktionsbaugruppe (A) stellt die Schnittstelle zu den externen Sensoren bzw. zu steuernden Teilen der Vorrichtung dar. Sie enthält einen Analog/Digitalwandler (12), der das Signal der Kamera (K) in Videoechtzeit digitalisiert. Der Verstärkungsfaktor ist hierbei abhängig vom Ausgangssignal einer Photodiode (13) gesteuert, so daß das Videosignal an unterschiedliche Helligkeitsverhältnisse bzw. unterschiedliche Energien der als Blitzlampen ausgebildeten Lichtquellen ($L_1$) bis ($L_3$) (siehe Fig. 4) angepaßt werden kann. Zur Ansteuerung der Blitzlampen ($L_1$) bis ($L_3$) enthält die Schnittstellenkarte (A) eine Triggerschaltung (31), die mit der Kamera (K) synchronisiert ist. Die Schnittstellenkarte (A) enthält außerdem die Steuerelektronik (32) für den Motor, mit dem das Objektiv (Bo) der Kamera (K) auf unterschiedliche Objektbereiche, wie in Fig. 4 durch den Pfeil ($Pf_2$) angedeutet, scharf gestellt werden kann. Die Abfolge der Blitze und die Verstellung des Objektivs wird entsprechend einem festgelegten Meßprogramm des in der Fig. 5 nicht dargestellten konventionellen Host-Rechners gesteuert. Dies ist durch die beiden Pfeile "Host" symbolisiert, die auch an anderer Stelle in der Schaltung nach Fig. 5a und 5b auftauchen.

Das digitalisierte Videosignal, das den A/D-Wandler (12) verläßt, ist den Eingängen zweier parallel geschalteter Konvolutionsbausteine (14a) und (14b) in der Funktionsbaugruppe (B) zugeführt. Diese beiden Bausteine (14a) und (14b) führen eine Faltungsoperation durch, um den Sinus bzw. Kosinus der Streifenphase an den einzelnen Objektpunkten zu bestimmen, wie dies bereits anhand von Fig. 2 erläutert wurde. Deren Ausgänge sind einer Schaltung (15) zugeführt, in der die Streifenphase aus dem Sinus und dem Kosinus berechnet wird. Hierzu ist in einer der Schaltung (15) zugeordneten Tabelle die Funktion Arcustangens abgelegt. Gleichzeitig werden auf der Basis der in der Schaltung (15) berechneten Phasenwerte ungültige Meßwerte maskiert. Ungültige Meßwerte sind solche, die bei entweder zu hoher oder zu geringer Beleuchtungsintensität aufgenommen worden sind und deren Pegel deshalb über oder unter einem vorbestimmten Grenzwert liegt. Die Maske, die diese Bildbereiche maskiert, wird in einem parallel zum Meßdatenstrom in dem mit (C) bezeichneten Schaltungsteil erzeugt, wie nachfolgend noch beschrieben werden wird.

Der Ausgang der Schaltung (15) ist über eine Berechnungsstufe (16) (arithmetic logic unit) drei parallel geschalteten Bildspeichern (17a-c) zugeführt. Dort werden die in der Schaltung (15) berechneten Streifenphasen $(\delta_1)$, $(\delta_2)$ und $(\delta_3)$ der von den drei Projektoren $(P_1)$, $(P_2)$ und $(P_3)$ im Zeitmultiplexbetrieb nacheinander projizierten Streifenmuster zwischengespeichert. In drei weiteren Bildspeichern (18a), (18b) und (18c) sind Korrekturwerte abgelegt, die in einem Kalibrierverfahren gewonnen wurden und die von der Unvollkommenheit des geometrisch-optischen Aufbaus der Vorrichtung herrührenden Verzerrungen der Streifenphase der durch die drei Projektoren projizierten Muster beschreiben. Diese Korrekturwerte werden in der Recheneinheit (16) von den Streifenphasen $(\delta_1)$, $(\delta_2)$ und $(\delta_3)$ subtrahiert. Die so korrigierten Phasenwerte gelangen wieder in die Bildspeicher (17a, b und c) und werden danach in einer zweiten Recheneinheit (19) weiterverarbeitet, die die Differenzen $(\Delta_1 = \delta_1 - \delta_2)$ und $(\Delta_2 = \delta_1 - \delta_3)$ berechnet. Diese Werte sind zur Berechnung des Objektabstandes (z) nach den Formeln (11), (12) und (13) erforderlich. Dabei ist zu berücksichtigen, daß $(\Delta_3)$ sich als Differenz aus $(\Delta_2 - \Delta_1)$ ergibt.

Auf die Recheneinheit (19) folgt eine Summationsstufe (S) (siehe Fig. 5b), die aus einer Recheneinheit (20) und zwei RAM-Speichern (21a) und (21b) besteht. In diesen Speichern (21a) und (21b) werden die Phasendifferenzen $(\Delta_1)$ und $(\Delta_2)$ für jeden Bildpunkt aufakkumuliert. Dies kann z.B. in einer Integer-Arithmethik so erfolgen, daß die 8 Bit Eingangswerte der die Phasendifferenzen $(\Delta_1)$ und $(\Delta_2)$ repräsentierenden Signale in einem Datenbereich von 16 Bit in den Speichern (22a) und (22b) aufsummiert werden. Auf diese Weise ist es möglich, die aus 255 Bildern gewonnenen Phasendifferenzen durch Summation zu mitteln und damit hinsichtlich der Genauigkeit der Phasenmessung zu verbessern.

Die Ausgänge der Bildspeicher (21a) und (21b) sind zwei darauffolgenden weiteren Recheneinheiten (22a) und (22b) zugeführt, in denen über weitere Tabellen (look-up-tables) die Formeln zur Berechnung des Objektabstandes gemäß Gleichung (14) und (15) bereitgehalten sind. Diese Recheneinheiten (22a) und (22b) berechnen zwei Werte für den Objektabstand (z), die in einer darauffolgenden Rechenstufe (23) nochmals gemittelt werden. In einem darauffolgenden digitalen Signalprozessor (24) werden die Koordinaten (x) und (y) der Bildpunkte gemäß Gleichung (16) und (17) aus den Meßwerten für (z) und den vom Host-Rechner gelieferten Gerätekonstanten $(x_k)$, $(y_k)$ und $(a_k)$ berechnet und einer Ausgabeeinheit (25) zugeführt.

Mit der beschriebenen Methode wird die Höheninformation über das zu vermessende Objekt absolut gewonnen und nicht nur Modulo $2\pi$ der Streifenphase.

Das vorstehend beschriebene Auswerteverfahren setzt voraus, daß die von der Kamera (K) gelieferten Signale im linearen Bereich der Kamerakennlinie erzeugt werden, daß insbesondere keine Unter- oder Übersteuerung vorkommt. Weiterhin ist es für das beschriebene Verfahren erforderlich, daß innerhalb einer Aufnahmeserie der drei von den Projektoren $(P_1)$, $(P_2)$ und $(P_3)$ projizierten Streifenmuster ein Phasenwert nur dann weiterverarbeitet wird, wenn die Phasenwerte in allen drei Bildern der Sequenz für den bestimmten Bildpunkt gültig sind. Diese Rechenoperationen werden im Schaltungsteil (C) von Fig. 5a durchgeführt. Ob ein Meßwert gültig oder ungültig ist, wird in einem Bit des look-up-tables LUT in der Recheneinheit (15) abgefragt. Die "und" Verknüpfung über die drei Videobildsequenzen wird in der Rechenstufe (26) zusammen mit einem rekusiv geschalteten RAM-Baustein (27) erzeugt. In der anschließenden Rechenstufe (28) wird die Anzahl der gültigen Meßwerte an jedem Bildpunkt berechnet und in einem nachfolgenden RAM-Baustein (29) gespeichert. Unter der Anzahl der Meßwerte ist hierbei die Anzahl der Videobilder zu verstehen, über die die Phasendifferenzen im Summationsbaustein (S) von Fig. 5b aufsummiert werden. Setzt man eine geeignet gewählte Grenze, die eine Mindestanzahl von gültigen Messungen für jeden Bildpunkt beschreibt, dann werden all die Bildpunkte ausgeblendet, in denen die Anzahl der gültigen Messungen unterhalb dieser Grenze liegt und alle übrigen Bildpunkte werden in die Ergebnisberechnung miteinbezogen. Die hierdurch beschriebene, über die Bildpunkte gelegte Datenmaske ist durch das mit (30) bezeichnete Quadrat in Fig. 5a symbolisiert. Mit ihr kann der zur Ausgabe dienende Videomonitor (42) an den entsprechenden Bildpunktstellen dunkelgesteuert werden.

Der anhand von Fig. 5a und 5b beschriebene in Hardware realisierte Auswerterechner stellt eine Lösung dar, mit der die Signale der Kamera zur Durchführung des erfindungsgemäßen Verfahrens verarbeitet werden können. Diese Lösung ist darauf zugeschnitten, daß die Streifenmuster durch die drei Projektoren $(P_1)$, $(P_2)$ und $(P_3)$ im Zeitmultiplexbetrieb nacheinander projiziert und die Bilder dann von der Kamera (K) nacheinander aufgenommen und verarbeitet werden. Es ist jedoch auch möglich, die Streifenmuster beispielsweise in verschiedenen Farben gleichzeitig zu projizieren und mit drei über Farbteiler getrennte Kameras gleichzeitig aufzunehmen. Dann müssen allerdings der Eingangskanal, d.h. der A/D-Wandler (12), die Konvolutionsbausteine (14a) und (14b), die Recheneinheiten (15) und (16), die im Zeitmultiplexbetrieb arbeiten, in entsprechender Anzahl von drei Stück parallel ausgeführt werden. Dies hat zwar höhere Kosten zur Folge, bietet jedoch auch eine größere Bandbreite in der Verarbeitungsfrequenz. Umgekehrt sind die beschriebenen Rechenoperationen auch auf einem passend programmierten, geeignet leistungsfähigen, sequentiell arbeitendem Rechner herkömmlicher Struktur ablauffähig, allerdings dort nur mit erheblich längeren Laufzeiten, so daß eine Echtzeitverarbeitung der Videosignale in diesem Falle nicht zu erzielen ist.

Dadurch, daß bei dem beschriebenen Verfahren die z-Messung immer als Differenz zweier Projektionen, beispielsweise der Streifenmuster der Projektoren $(P_1)$ und $(P_2)$ oder der Projektoren $(P_2)$ und $(P_3)$ gebildet wird, kann der Träger (W) mit den Gittern $(G_1)$ bis $(G_3)$ (siehe Fig. 4) in Richtung des Pfeils $(Pf_1)$ verschoben werden, ohne daß die bei der Signalauswertung erhaltenen z-Werte beeinflußt werden. Hierbei können nun mehrere Messungen mit verschiedenen Stellungen des Gitterträgers (W) gemacht werden, bei denen entsprechend auch unterschiedliche Bereiche der Gitter beleuchtet sind. Da die Einzelmessungen hinsichtlich der Phasendifferenzen ($\Delta\phi$) über alle Bilder aufaddiert und hierbei gemittelt werden, wirkt sich das so aus, daß statistische Fehler, herrührend entweder von Fertigungsungenauigkeiten der Gitter oder herrührend durch die einmalige Anwendung des Auswertealgorithmus, mit ($\sqrt{N}$) verbessert werden, wenn (N) die Anzahl der Messungen ist. Gleichzeitig kann die Beleuchtungsintensität von dem Wert Null bis zur Sättigung durchgesteuert werden, damit möglichst von allen Objektpunkten, deren Reflektionsvermögen ja durchaus unterschiedlich sein kann, brauchbare Meßwerte erhalten werden können. Die Maskierungselektronik in Teil (C) der Schaltung von Fig. 5a sorgt hierbei dafür, daß alle Messungen im nicht-linearen Bereich der Kamera (K) verworfen werden.

In den beschriebenen Ausführungsbeispielen ist für jeden Projektor eine separate Lichtquelle $(L_1)$ bis $(L_3)$ vorgesehen. Es ist jedoch auch möglich, den Projektoren das Licht einer einzigen Lichtquelle über einen entsprechend gesteuerten optischen Richtkoppler zeitlich sequentiell zuzuleiten.

## Patentansprüche

1. Verfahren zur berührungslosen Vermessung von Objektoberflächen mit Hilfe von auf die Objektoberfläche projizierten Streifenmustern, die von einer Kamera (K) detektiert und in einem Rechner ausgewertet werden, wobei mindestens zwei Streifenmuster $(G_1, G_2)$ gleicher Periode unter einem Winkel zueinander geneigt projiziert werden,
dadurch gekennzeichnet, daß
die beiden Streifenmuster voneinander getrennt aufgenommen und in einem ersten Schritt getrennt verarbeitet werden, indem die Phasenlage ($\varphi_1$, $\varphi_2$) der beiden Streifenmuster für die Objektpunkte bestimmt wird,
- und daß der Abstand (z) der Objektpunkte in Richtung der Kameraachse aus den virtuellen und auch bei Verschiebung beider Streifensysteme relativ zur Kamera raumfesten Differenzen der Streifenphase ($\Delta\varphi$) beider Muster für jeden Objektpunkt im Rechner bestimmt wird.

2. Verfahren nach Anspruch 1, dadurch gekennzeichnet, daß die Differenzen der Streifenphase ($\Delta\varphi$) für die Objektpunkte über mehrere Videobilder aufsummiert werden.

3. Verfahren nach Anspruch 1, dadurch gekennzeichnet, daß die mindestens zwei Streifenmuster $(G_1, G_2)$ zeitlich nacheinander projiziert und im Zeitmultiplexbetrieb ausgewertet werden.

4. Verfahren nach Anspruch 1, dadurch gekennzeichnet, daß die mindestens zwei Streifenmuster mit unterschiedlicher Farbe projiziert werden und über Farbteiler von mehreren Kameras aufgenommen werden.

5. Verfahren nach Anspruch 1, dadurch gekennzeichnet, daß drei oder mehr Streifenmuster $(G_1, G_2, G_3)$ projiziert werden, wobei der Winkel ($\alpha_2$) zwischen zwei Projektionen $(P_2, P_3)$ klein gegen den Winkel ($\alpha_1$) zwischen zwei anderen Projektionen $(P_1, P_2)$ ist.

**6.** Verfahren nach Anspruch 1, dadurch gekennzeichnet, daß während der Aufsummierung der Differenzen der Phasenlage ($\Delta\varphi$) der Streifensysteme ($G_1$, $G_2$, $G_3$) die Intensität der Streifenprojektion bzw. die Fokussierung der Kamera (K) geändert wird.

**7.** Verfahren nach Anspruch 1, dadurch gekennzeichnet, daß die Streifensysteme telezentrisch projiziert werden.

**8.** Vorrichtung zur berührungslosen Vermessung von Objektoberflächen mit
- mindestens zwei Projektoren ($P_1$, $P_2$) zur Erzeugung von Streifenmustern auf dem zu vermessenden Objekt (O)
- einer Videokamera (K) zur Aufnahme der Streifenmuster, wobei die Projektoren ($P_1$, $P_2$) jeweils einen Musterträger ($G_1$, $G_2$) mit gleicher Periode enthalten
- einer Anordnung zur Auswertung der aufgenommenen Streifenmuster, dadurch gekennzeichnet, daß
- Mittel vorgesehen sind, die die Streifenmuster der Projektoren voneinander unterscheiden,
- die Auswerteanordnung eine Einrichtung enthält, die die Phasenlage der unterschiedlichen Streifenmuster getrennt bestimmt und die Differenzen ($\Delta\varphi$) der Streifenphase bildet,
- ein Bildspeicher (S) vorgesehen ist, in dem die Differenzen ($\Delta\varphi$) der Streifenphase ($\varphi$) von mehreren Videobildern eingelesen und aufakkumuliert werden.

**9.** Vorrichtung nach Anspruch 8, dadurch gekennzeichnet, daß die Musterträger Gitter ($G_1$, $G_2$) sind, die eine sinus- bzw. kosinusförmige Transmissionscharakteristik besitzen.

**10.** Vorrichtung nach Anspruch 9, dadurch gekennzeichnet, daß die Gitter ($G_1$, $G_2$) Rechteckgitter sind und die Projektoren Schlitzblenden enthalten.

**11.** Vorrichtung nach Anspruch 9, dadurch gekennzeichnet, daß die Gitter ($G_1$, $G_2$) auf einem gemeinsamen, relativ zur Videokamera in der Gitterebene bewegbaren Träger (K) angeordnet sind.

## Claims

**1.** Method for the non-contact measurement of object surfaces by the aid of fringe patterns projected on the object surface, said patterns being detected by a camera (K) and evaluated by a computer, whereby, at least two fringe patterns ($G_1$, $G_2$) having the same periods are projected at an angle inclined toward each other, characterized in that the two fringe patterns are recorded separately from each other and processed separately during a first step in that the phase relationship ($\varphi_1$, $\varphi_2$), of the two fringe patterns is determined for the object points, and that the distance (z) of the object points in the direction of the camera axis is determined for each object point by the computer based on the virtual - and stationary even when both fringe systems are shifted relative to the camera - differences between the fringe phases ($\Delta\varphi$) of the two patterns.

**2.** Method according to claim 1, characterized in that the differences between the fringe phases ($\Delta\varphi$) for the object points of several video images are summed up.

**3.** Method according to claim 1, characterized in that the at least two fringe patterns ($G_1$, $G_2$) are projected chronologically in sequence and evaluated by time-division multiplexing.

**4.** Method according to claim 1, characterized in that the at least two fringe patterns are projected with different colors and recorded by several cameras via color dividers.

**5.** Method according to claim 1, characterized in that three or more fringe patterns ($G_1$, $G_2$, $G_3$) are projected, whereby the angle ($\alpha_2$) between two projections ($P_2$, $P_3$) is small compared with the angle ($\alpha_1$) between the other two projections ($P_1$, $P_2$).

**6.** Method according to claim 1, characterized in that, during the summation of the differences between the phase relationships ($\Delta\varphi$) of the fringe systems ($G_1$, $G_2$, $G_3$), the intensity of the fringe projection or/and the focus of the camera (K) is changed.

7. Method according to claim 1, characterized in that the fringe systems are projected telecentrically.

8. Apparatus for the non-contact measurement of object surfaces comprising
   - at least two projectors ($P_1$, $P_2$) for the generation of fringe patterns on the object (O) to be measured,
   - a video camera (K) for recording said fringe patterns, whereby the projectors ($P_1$, $P_2$) each contain a sample support ($G_1$, $G_2$) having patterns of the same period,
   - an arrangement for evaluating the recorded fringe patterns,
   characterized in that
   - means are provided which distinguish the fringe patterns of the projectors from each other,
   - the evaluation arrangement contains means which determines the phase relationships of the different fringe patterns separately and establishes the differences ($\Delta\varphi$) between the fringe phases,
   - an image storage (S) is provided into which the differences ($\Delta\varphi$) between the fringe phases ($\varphi$) of several video images are read and accumulated.

9. Apparatus according to claim 8, characterized in that the sample supports are gratings ($G_1$, $G_2$) which exhibit sinusoidal or cosinusoidal transmission characteristics.

10. Apparatus according to claim 9, characterized in that the gratings ($G_1$, $G_2$) are binary transmission gratings and the projectors contain slotted diaphragms.

11. Apparatus according to claim 9, characterized in that the gratings ($G_1$, $G_2$) are provided on a common support (K) which can be moved within the grating plane relative to the video camera.


## Revendications

1. Procédé de mesure sans contact de surfaces d'objets à l'aide de modèles de bandes projetés sur la surface de l'objet et qui sont détectés par une caméra (K) et évalués dans un calculateur, selon lequel au moins deux modèles de bandes ($G_1$, $G_2$) possédant une même période sont projetés en étant inclinés réciproquement sous un certain angle,
   caractérisé en ce que
   - les deux modèles de bandes sont enregistrés séparément l'un de l'autre et sont traités séparément lors d'une première étape, lors de laquelle la position de phase ($\varphi_1$, $\varphi_2$) des deux modèles de bandes est déterminée pour les points de l'objet, et
   - que la distance (z) des points de l'objet dans la direction de l'axe de la caméra est déterminée à partir des différences virtuelles, et qui sont fixes dans l'espace par rapport à la caméra même dans le cas d'un décalage des deux systèmes de bandes, de la phase ($\Delta\varphi$) des bandes des deux modèles pour chaque point de l'objet dans le calculateur.

2. Procédé selon la revendication 1, caractérisé en ce que les différences de la phase ($\Delta\varphi$) des bandes pour les points d'un objet sont additionnées sur plusieurs images vidéo.

3. Procédé selon la revendication 1, caractérisé en ce que les modèles de bandes ($G_1$, $G_2$), prévus au moins au nombre de deux, sont projetés successivement dans le temps et sont évalués selon un fonctionnement à multiplexage temporel.

4. Procédé selon la revendication 1, caractérisé en ce que deux profils en forme de bandes, présents au moins au nombre de deux et possédant des couleurs différentes, sont projetés et sont enregistrés, moyennant l'interposition de diviseurs chromatiques, par plusieurs caméras.

5. Procédé selon la revendication 1, caractérisé en ce que trois ou plusieurs modèles de bandes ($G_1$, $G_2$, $G_3$) sont projetés, l'angle ($\alpha_2$) entre deux projections ($P_2$, $P_3$) étant faible par rapport à l'angle ($\alpha_1$) entre deux autres positions ($P_1$, $P_2$).

6. Procédé suivant la revendication 1, caractérisé par le fait que pendant l'addition des différences de la position de phase ($\Delta\varphi$) des systèmes de bandes ($G_1$, $G_2$, $G_3$), l'intensité de la projection des bandes ou la focalisation de la caméra (K) est modifiée.

7. Procédé suivant la revendication 1, caractérisé par le fait que les systèmes de bandes sont projetés de façon télécentrique.

8. Dispositif pour la mesure sans contact de surfaces d'objets comportant
   - au moins deux projecteurs ($P_1$, $P_2$) pour produire des modèles de bandes sur l'objet à mesurer (O),
   - une caméra vidéo (K) pour enregistrer les modèles de bandes, les projecteurs ($P_1$, $P_2$) contenant des supports de modèles ($G_1$, $G_2$) de même période,
   - un dispositif pour évaluer les modèles de bandes enregistrés,
   caractérisé en ce que
   - des moyens sont prévus pour différencier les uns des autres les modèles de bandes des projecteurs,
   - le dispositif d'évaluation contient un dispositif qui détermine séparément la position de phase des différents modèles de bandes et forme les différences ($\Delta\varphi$) de la phase des bandes,
   - il est prévu une mémoire d'images (S), dans laquelle les différences ($\Delta\varphi$) de la base ($\varphi$) des bandes de plusieurs images vidéo sont enregistrées et cumulées.

9. Dispositif selon la revendication 8, caractérisé en ce que les supports de modèles sont des grilles ($G_1$, $G_2$), qui possèdent des caractéristiques de transmission en forme de sinus ou de cosinus.

10. Dispositif selon la revendication 9, caractérisé en ce que les grilles ($G_1$, $G_2$) sont des grilles rectangulaires et que les projecteurs sont des diaphragmes à fente.

11. Dispositif selon la revendication 9, caractérisé en ce que les grilles ($G_1$, $G_2$) sont disposées sur un support commun (K) qui est déplaçable par rapport à la caméra vidéo dans le plan des grilles.

Fig. 1

## Fig. 2

Fig. 3

EP 0 451 474 B1

Fig. 4

EP 0 451 474 B1

**Fig. 5a**

Fig. 5b